# EUROPEAN PATENT APPLICATION

(11) **EP 2 706 720 A1**
(43) Date of publication of application: **12.03.2014**
(21) Application number: 13157775.1
(22) Date of filing: 05.03.2013
(51) Int. Cl.: H04L 29/06, H04W 12/06

(54) **Mobile wireless device, wireless communication system and wireless communication method**

(30) Priority: 07.09.2012 JP 2012197686
(71) Applicant: Kabushiki Kaisha Toshiba, Tokyo (JP)
(72) Inventor: Akita, Koji, Tokyo (JP); Kishimoto, Ariyuki, Tokyo (JP); Waragai, Shinichi, Tokyo (JP); Matsuo, Ryoko, Tokyo (JP); Ito, Takayoshi, Tokyo (JP); Kamoi, Makoto, Tokyo (JP); Suzuki, Masashi, Tokyo (JP)
(74) Representative: HOFFMANN EITLE

(57) **Abstract**

A mobile wireless device has a first communication unit configured to perform proximity wireless communication with a communication device, a certification unit configured to perform a certification process between the mobile wireless device and the communication device via the proximity wireless communication using the first communication unit, a second communication unit configured to perform proximity wireless communication with an extra mobile wireless device, and an operation controller configured to control the extra mobile wireless device via the proximity wireless communication using the second communication unit, after the certification process is normally completed.

## Description

### CROSS REFERENCE TO RELATED APPLICATIONS

This application is based upon and claims the benefit of priority from the prior Japanese Patent Application No. 2012-197686, filed on September 7, 2012, the entire contents of which are incorporated herein by reference.

### FIELD

Embodiments of the present invention relate to a mobile wireless device, a wireless communication system, and a wireless communication method for performing proximity wireless communication.

### BACKGROUND

With the development of wireless technology, mobile wireless devices such as cellular phone, smartphone, tablet terminal, note-type PC, game machine, IC CARD, etc. have been rapidly spreading.

These mobile wireless devices can wirelessly communicate with each other with simple steps, but there is a likelihood that personal information or confidential information is illegally utilized, which is because there is no unifield mechanism to appropriately protect the information transferred through wireless communication.

### BRIEF DESCRIPTION OF THE DRAWINGS

Fig. 1 is a block diagram showing a schematic structure of a wireless communication system 1 according to a first embodiment.
Fig. 2 is a block diagram showing a schematic structure of a mobile wireless device 2 according to the first embodiment.
Fig. 3 is a block diagram showing a schematic structure of an extra mobile wireless device 4 according to the first embodiment.
Fig. 4 is a block diagram showing a schematic structure of a communication device 3 according to the first embodiment.
Fig. 5 is a sequence diagram showing processing operations performed by the wireless communication system 1 according to the first embodiment.
Fig. 6 is a block diagram showing a schematic structure of the mobile wireless device 2 according to a second embodiment.
Fig. 7 is a block diagram showing a schematic structure of the extra mobile wireless device 4 according to the second embodiment.
Fig. 8 is a block diagram showing a schematic structure of the communication device 3 according to the second embodiment.
Fig. 9 is a block diagram showing a schematic structure of the mobile wireless device 2 according to a third embodiment.
Fig. 10 is a block diagram showing a schematic structure of the extra mobile wireless device 4 according to the third embodiment.
Fig. 11 is a block diagram showing a schematic structure of the extra mobile wireless device 4 according to a fourth embodiment.
Fig. 12 is a sequence diagram showing processing operations performed by the wireless communication system 1 according to the fourth embodiment.
Fig. 13 is a block diagram showing a schematic structure of the extra mobile wireless device 4 according to a fifth embodiment.
Fig. 14 is a block diagram showing a schematic structure of the communication device 3 according to the fifth embodiment.
Fig. 15 is a sequence diagram showing processing operations performed by the wireless communication system 1 according to the fifth embodiment.
Fig. 16 is a block diagram showing a schematic structure of the extra mobile wireless device 4 according to a sixth embodiment.
Fig. 17 is a sequence diagram showing processing operations performed by the wireless communication system 1 according to the sixth embodiment.
Fig. 18 is a block diagram showing a schematic structure of the extra mobile wireless device 4 according to a first modification example derived from Fig. 16.
Fig. 19 is a sequence diagram corresponding to Fig. 18.
Fig. 20 is a block diagram showing a schematic structure of the extra mobile wireless device 4 according to a second modification example derived from Fig. 16.
Fig. 21 is a sequence diagram corresponding to Fig. 20.
Fig. 22 is a diagram showing an example of superposing opposing faces of the extra mobile wireless device 4 and mobile wireless device 2 on each other.
Fig. 23 is a diagram showing a modification example derived from Fig. 22.
Fig. 24 is a diagram showing directivity of an antenna of a card-like housing.
Figs. 25(a) and (b) are diagrams each showing an example of arranging an antenna on a symmetry axis of a card-like housing.
Fig. 26 is a diagram showing an example of a card-like housing having a cut-off corner.

### DETAILED DESCRIPTION

According to one embodiment, a mobile wireless device has a first communication unit configured to perform proximity wireless communication with a communication device, a certification unit configured to perform a certification process between the mobile wireless device and the communication device via the proximity wireless communication using the first communication unit, a second communication unit configured to perform proximity wireless communication with an extra mobile wireless device, and an operation controller configured to control the extra mobile wireless device via the proximity wireless communication using the second communication unit, after the certification process is normally completed.

Embodiments will now be explained with reference to the accompanying drawings.

### (First Embodiment)

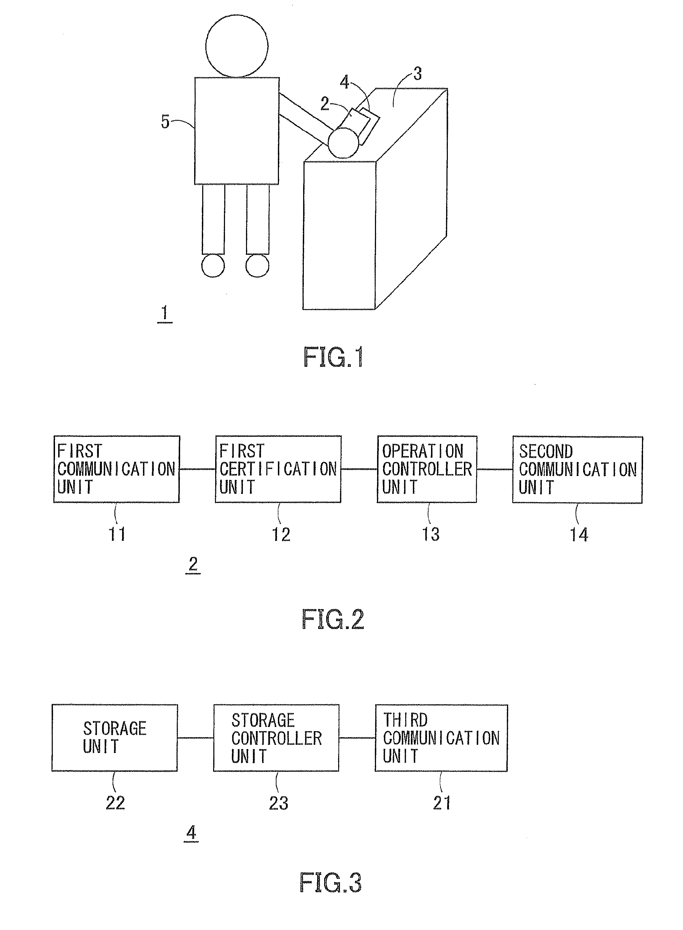

Fig. 1 is a schematic diagram of a wireless communication system 1 according to a first embodiment. The wireless communication system 1 of Fig. 1 has a mobile wireless device 2, a communication device 3, and an extra mobile wireless device 4. Among these devices, the mobile wireless device 2 and the extra mobile wireless device 4 are held by, e.g., a single user 5, and the communication device 3 is installed in, e.g., a store.

Fig. 2 is a block diagram showing a schematic structure of the mobile wireless device 2 according to the first embodiment. The mobile wireless device 2 of Fig. 2 has a first communication unit 11, a first certification unit 12, a second communication unit 13, and an operation controller 14.

The first communication unit 11 performs proximity wireless communication with the communication device 3. The communication device 3 is, e.g., an information read/write device, which is, more concretely, incorporated into entrance gate, cash register, etc. to read/write information by performing proximity wireless communication with the mobile wireless device 2 held by a user.

The first certification unit 12 performs a certification process between the mobile wireless device 2 and the communication device 3 via the proximity wireless communication using the first communication unit 11. The certification process is a process for confirming that, e.g., a certain device is a specific device. For example, this certification process is performed by at least one of the mobile wireless device 2 and the communication device 3 to confirm that its communication partner is a specific device. Hereinafter, explanation will be given on an example where each of the mobile wireless device 2 and the communication device 3 performs the certification process on its communication partner.

The certification process explained in this specification, which is performed by the first certification unit 12 etc., includes not only a certification without a network communication, but also an authentication with the network communication.

The second communication unit 13 performs proximity wireless communication with the extra mobile wireless device 4. The extra mobile wireless device 4 is, e.g., another mobile wireless device held by the user holding the mobile wireless device 2 of Fig. 2.

The operation controller 14 controls the extra mobile wireless device 4 via the proximity wireless communication using the second communication unit 13, after the certification process has been normally completed by the first certification unit 12. That is, the operation controller 14 cannot control the operation of the extra mobile wireless device 4 as long as the certification process performed by the first certification unit 12 is not normally completed.

This makes it possible to restrict proximity wireless communication with the extra mobile wireless device 4, thereby preventing illegal information acquisition using the extra mobile wireless device 4.

Fig. 3 is a block diagram showing a schematic structure of the extra mobile wireless device 4 according to the first embodiment.

The extra mobile wireless device 4 shown in Fig. 3 has a third communication unit 21, a storage 22, and a storage controller 23.

The third communication unit 21 performs proximity wireless communication with the second communication unit 13 in the mobile wireless device 2 of Fig. 2.

The storage 22 stores information concerning functions of the extra mobile wireless device 4, information acquired through the second communication unit 13, etc. The storage controller 23 controls access to the storage 22, based on the result obtained from the proximity wireless communication with the first mobile wireless device 2 through the third communication unit 21. Here, the "access" involves any one of only reading information from the storage 22, only writing information into the storage 22, and reading and writing information from and into the storage 22.

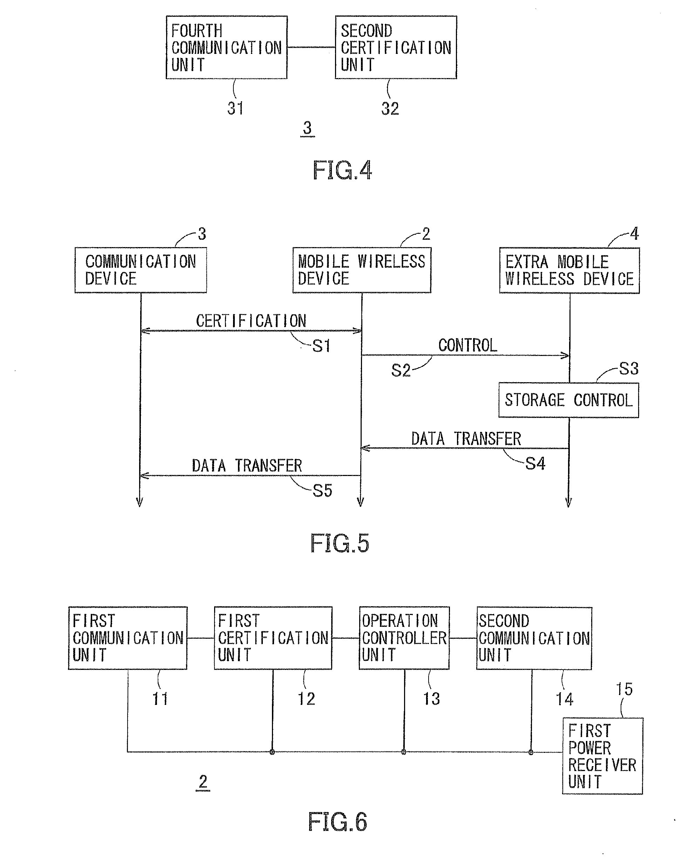

Fig. 4 is a block diagram showing a schematic structure of the communication device 3 according to the first embodiment. The communication device 3 of Fig. 4 has a fourth communication unit 31 and a second certification unit 32.

The fourth communication unit 31 performs proximity wireless communication with the first communication unit 11 in the mobile wireless device 2 of Fig. 2.

The second certification unit 32 performs a certification process between the second certification unit 32 and the first certification unit 12 in the mobile wireless device 2 of Fig. 2 via the proximity wireless communication using the third communication unit 21.

Only when being placed in proximity to the communication device 3, the mobile wireless device 2 of Fig. 2 can perform the certification process between the mobile wireless device 2 and the communication device 3 via the proximity wireless communication using the first communication unit 11. Further, only when being placed in proximity to the mobile wireless device 2 of Fig. 2, the extra mobile wireless device 4 shown in Fig. 3 can perform proximity wireless communication with the mobile wireless device 2 of Fig. 2 through the second communication unit 13 and the third communication unit 21.

Therefore, only when the mobile wireless device 2 of Fig. 2, the extra mobile wireless device 4 shown in Fig. 3, and the communication device 3 are placed in proximity to one another, the mobile wireless device 2 of Fig. 2 can control the operation of the extra mobile wireless device 4, after the certification process between the mobile wireless device 2 and the communication device 3 has been normally completed. This makes it possible to prevent the extra mobile wireless device 4 from being illegally utilized.

Fig. 5 is a sequence diagram showing processing operations performed by the wireless communication system 1 according to the first embodiment. This sequence diagram shows processing operations for transferring the information stored in the storage 22 in the extra mobile wireless device 4 to the communication device 3.

First, proximity wireless communication is performed between the first communication unit 11 in the mobile wireless device 2 of Fig. 2 and the fourth communication unit 31 in the communication device 3 of Fig. 4, and the certification process is performed between the first certification unit 12 in the mobile wireless device 2 of Fig. 2 and the second certification unit 32 in the communication device 3 of Fig. 4 (Step S1).

When the certification process has been normally completed, proximity wireless communication is performed between the second communication unit 13 in the mobile wireless device 2 of Fig. 2 and the third communication unit 21 in the extra mobile wireless device 4 shown in Fig. 3, and the operation controller 14 in the mobile wireless device 2 of Fig. 2 controls the operation of the extra mobile wireless device 4 (Step S2).

Based on the instruction from the operation controller 14, the storage controller 23 in the extra mobile wireless device 4 writes/reads information into/from the storage 22 (Step S3).

The information read from the storage 22 based on the instruction from the operation controller 14 is transferred to the mobile wireless device 2 of Fig. 2 through the third communication unit 21 and the second communication unit 13 (Step S4). This information is further transferred to the communication device 3 of Fig. 4 through the first communication unit 11 and the fourth communication unit 31 (Step S5).

As stated above, in the first embodiment, when the mobile wireless device 2 is placed in proximity to the communication device 3, the certification process is performed between the mobile wireless device 2 and the communication device 3, and after the certification process is normally completed and the extra mobile wireless device 4 is placed in proximity to the mobile wireless device 2, access to the storage 22 in the extra mobile wireless device 4 is permitted.

Therefore, access to the storage 22 in the extra mobile wireless device 4 is inhibited as long as the mobile wireless device 2, the extra mobile wireless device 4, and the communication device 3 are not placed in proximity to one another, which makes it possible to prevent the extra mobile wireless device 4 from being illegally utilized.

Further, when a user holding the mobile wireless device 2 and the extra mobile wireless device 4 brings the devices 2 and 4 close to the communication device 3, the certification process is automatically performed between the mobile wireless device 2 and the communication device 3, and after the certification process has been normally completed, the extra mobile wireless device 4 can be utilized to acquire information, for example. Thus, the user can acquire various kinds of information without going through an annoying process.

### (Second Embodiment)

A second embodiment to be explained below is characterized in performing proximity wireless communication utilizing wirelessly received power

Fig. 6 is a block diagram showing a schematic structure of the mobile wireless device 2 according to the second embodiment. The mobile wireless device 2 of Fig. 6 further has a first power receiver 15 in addition to the components shown in Fig. 2.

The first power receiver 15 wirelessly receives power. More specifically, the first power receiver 15 receives power using a coil (not shown) which receives current produced by a received RF signal and generates power through electromagnetic induction. The first power receiver 15 may receive power by applying an antenna used by the first communication unit 11 to perform proximity wireless communication.

The power received by the first power receiver 15 is used to drive a part or all of the components in the mobile wireless device 2. For example, the power received by the first power receiver 15 is used to drive at least one of the first communication unit 11 and the first certification unit 12.

Generally, wirelessly receivable power is smaller than battery power, and thus it is difficult to perform long-distance wireless communication with the power received by the first power receiver 15. Accordingly, if at least one of the first communication unit 11 and the first certification unit 12 is driven by the power received by the first power receiver 15, it is possible to prevent the first communication unit 11 from performing remote wireless communication and to prevent the certification unit from performing the certification process over a long distance.

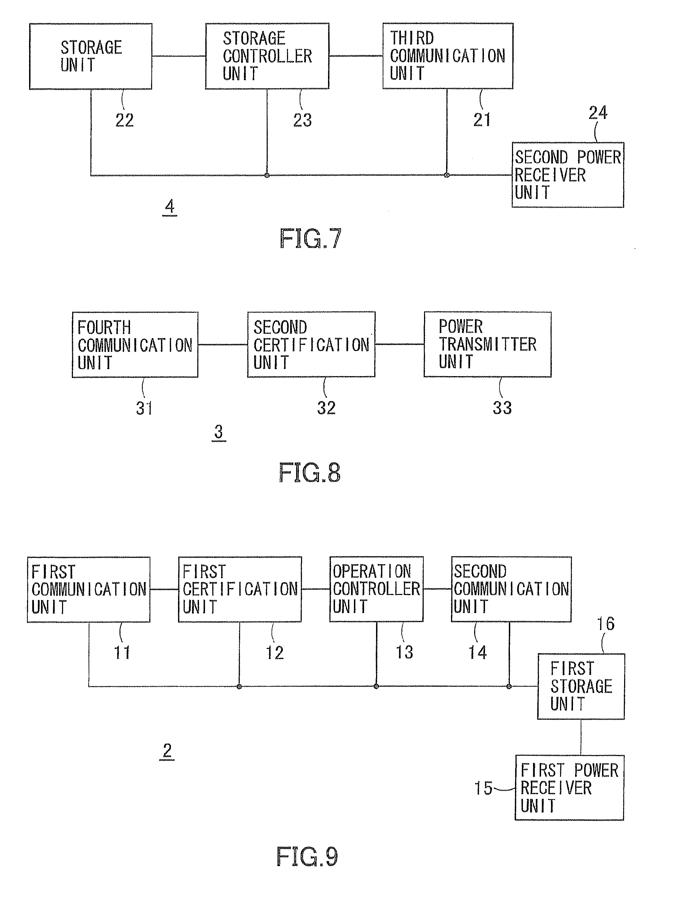

Fig. 7 is a block diagram showing a schematic structure of the extra mobile wireless device 4 according to the second embodiment.

The extra mobile wireless device 4 shown in Fig. 7 further has a second power receiver 24 in addition to the components shown in Fig. 3. Similarly to the first power receiver 15, the second power receiver 24 receives power using a coil (not shown) which receives current produced by a received RF signal and generates power through electromagnetic induction.

The power received by the second power receiver 24 is used to drive a part or all of the components in the extra mobile wireless device 4. For example, the power received by the second power receiver 24 is used to drive at least one of the third communication unit 21 and the storage controller 23.

Since wirelessly receivable power is small as stated above, if at least one of the third communication unit 21 and the storage controller 23 is driven by the power received by the second power receiver 24, it is possible to prevent the third communication unit 21 from performing remote wireless communication and to prevent the storage controller 23 from accessing the storage 22 for a long period.

Fig. 8 is a block diagram showing a schematic structure of the communication device 3 according to the second embodiment. The communication device 3 of Fig. 8 further has a power transmitter 33 in addition to the components shown in Fig. 4.

The power transmitter 33 wirelessly transmits power. More specifically, the power transmitter 33 transmits an RF signal for power supply from a coil or an antenna (not shown). The power transmitter 33 may transmit the RF signal for power supply by applying an antenna used by the fourth communication unit 31 to perform proximity wireless communication.

As stated above, in the second embodiment, at least a part of the mobile wireless device 2 and at least a part of the extra mobile wireless device 4 are driven utilizing wirelessly received power, which makes it possible to physically prohibits remote wireless communication and to prevent illegal information acquisition using the extra mobile wireless device 4.

### (Third Embodiment)

A third embodiment to be explained below is characterized in storing wirelessly received power.

Fig. 9 is a block diagram showing a schematic structure of the mobile wireless device 2 according to the third embodiment. The mobile wireless device 2 of Fig. 9 further has a first storage unit 16 in addition to the components shown in Fig. 6. The first storage unit 16 stores a part or all of the power received by the first power receiver 15. The power stored in the first storage unit 16 is used to drive a part or all of the components in the mobile wireless device 2.

The first storage unit 16 makes it possible to stably supply power within the mobile wireless device 2 even when the wirelessly received power is not stable.

Further, when the wirelessly received power is not enough to drive each component in the mobile wireless device, the received power may be temporarily stored in the first storage unit 16 and used to drive each component after the stored electric energy reaches a level sufficient for drive, which makes it possible to stabilize the operation of each component.

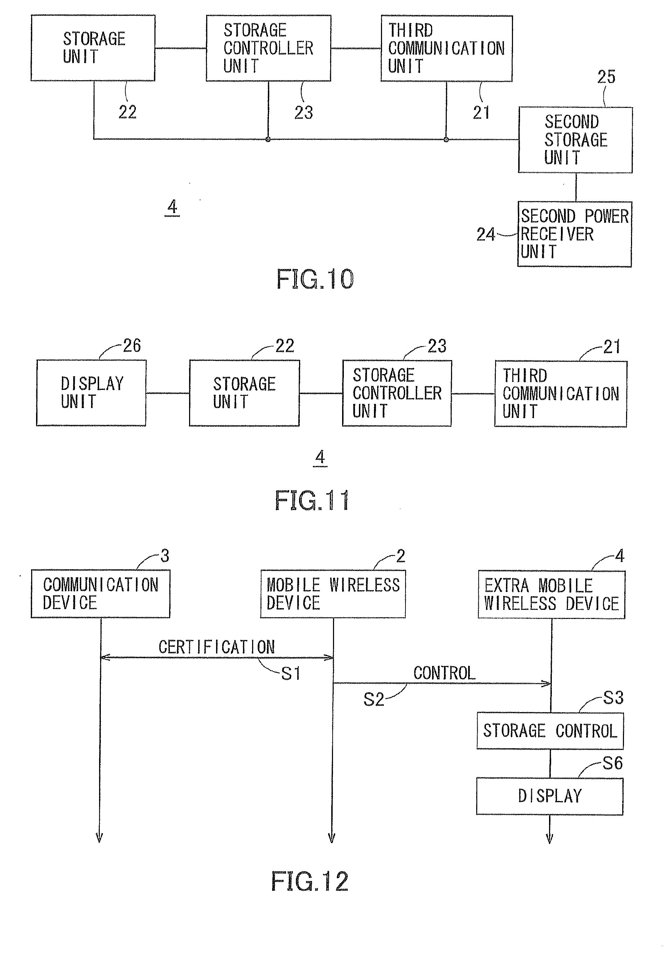

Fig. 10 is a block diagram showing a schematic structure of the extra mobile wireless device 4 according to the third embodiment. The extra mobile wireless device 4 shown in Fig. 10 further has a second storage unit 25 in addition to the components of the extra mobile wireless device 4 shown in Fig. 7. The second storage unit 25 stores a part or all of the power received by the second power receiver 24. The power stored in the second storage unit 25 is used to drive a part or all of the components in the extra mobile wireless device 4.

The second storage unit 25 makes it possible to stably supply power within the extra mobile wireless device 4 even when the wirelessly received power is not stable.

Further, when the wirelessly received power is not enough to drive each component in the extra mobile wireless device 4, the received power may be temporarily stored in the second storage unit 25 and used to drive each component after the stored electric energy reaches a level sufficient for drive.

The communication device 3 according to the third embodiment is configured similarly to Fig. 8, and the explanation thereof will be omitted.

As stated above, in the third embodiment, by providing the first and second storage units 16 and 25 corresponding to the first and second power receivers 15 and 24 respectively, the mobile wireless device 2 and the extra mobile wireless device 4 can be driven more stably using the power received by the first and second power receivers 15 and 24.

### (Fourth Embodiment)

A fourth embodiment to be explained below is characterized in providing a display in the extra mobile wireless device 4.

Fig. 11 is a block diagram showing a schematic structure of the extra mobile wireless device 4 according to the fourth embodiment. The extra mobile wireless device 4 shown in Fig. 11 further has a display 26 in addition to the components shown in Fig. 3.

The display 26 can display the information stored in the storage 22, and the display is controlled by the storage controller 23. Note that a display controller for controlling the display may be provided separately from the storage controller 23.

The mobile wireless device 2 and communication device 3 according to the fourth embodiment are configured similarly to Fig. 9 and Fig. 8, respectively, and the explanation thereof will be omitted. Note that the display 26 may be provided in the extra mobile wireless device 4 shown in Fig. 7 or Fig. 10.

Fig. 12 is a sequence diagram showing processing operations performed by the wireless communication system 1 according to the fourth embodiment. In Fig. 5, the information stored in the storage 22 in the extra mobile wireless device 4 is transferred to the communication device 3 through the mobile wireless device 2, while in Fig. 12, the information stored in the storage 22 is displayed on the display 26 (Step S6).

As stated above, in the fourth embodiment, the information stored in the storage 22 in the extra mobile wireless device 4 can be displayed on the display 26 in the extra mobile wireless device 4, which improves the convenience of users since the information acquired by the extra mobile wireless device 4 can be browsed simply and quickly.

### (Fifth Embodiment)

The first to fourth embodiments are not based on the assumption that the extra mobile wireless device 4 and the communication device 3 directly communicate with each other. On the other hand, a fifth embodiment to be explained below is **characterized in that** the extra mobile wireless device 4 and the communication device 3 can directly communicate with each other.

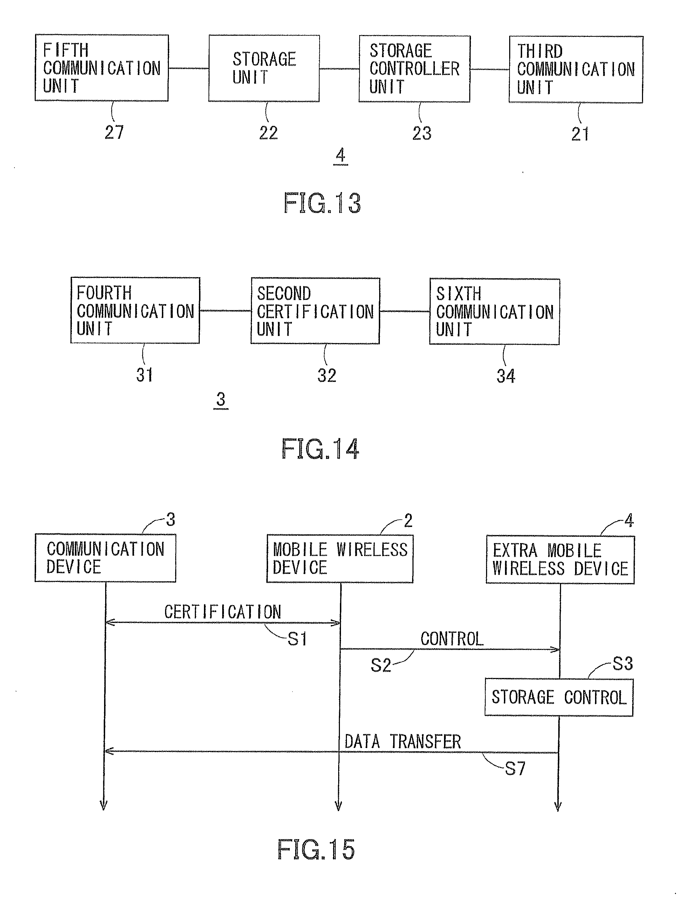

Fig. 13 is a block diagram showing a schematic structure of the extra mobile wireless device 4 according to the fifth embodiment. The extra mobile wireless device 4 shown in Fig. 13 further has a fifth communication unit 27 in addition to the components shown in Fig. 3.

The fifth communication unit 27 performs proximity wireless communication with the communication device 3 at high speed. The phrase "at high speed" means that the communication speed in this case is faster compared to the proximity wireless communication performed between the first communication unit 11 and the fourth communication unit 31 and the proximity wireless communication performed between the second communication unit 13 and the third communication unit 21.

Fig. 14 is a block diagram showing a schematic structure of the communication device 3 according to the fifth embodiment. The communication device 3 of Fig. 14 further has a sixth communication unit 34 in addition to the components shown in Fig. 4. The sixth communication unit 34 performs proximity wireless communication with the fifth communication unit 27 in the extra mobile wireless device 4 at high speed.

The mobile wireless device 2 according to the fifth embodiment is configured similarly to Fig. 1, and the explanation thereof will be omitted. Note that the extra mobile wireless device 4 shown in Fig. 7, Fig. 10, or Fig. 11 may be provided in the fifth communication unit 27. Further, the sixth communication unit 34 may be provided in the communication device 3 of Fig. 8.

Fig. 15 is a sequence diagram showing processing operations performed by the wireless communication system 1 according to the fifth embodiment. In Fig. 15, the information stored in the storage 22 in the extra mobile wireless device 4 can be directly transferred to the communication device 3 at high speed without involving the mobile wireless device 2 (Step S7).

In the example shown in Fig. 15, information is transferred from the extra mobile wireless device 4 to the communication device 3, but information may also be transferred from the communication device 3 to the extra mobile wireless device 4 without involving the mobile wireless device 2.

As stated above, in the fifth embodiment, the fifth communication unit 27 and the sixth communication unit 34 are provided to perform proximity wireless communication directly between the extra mobile wireless device 4 and the communication device 3 at high speed, which further improves the convenience of users since a large volume of information can be read/written from/in the storage 22 in the extra mobile wireless device 4 at high speed.

### (Sixth Embodiment)

In the first to fifth embodiments, the certification process is performed only between the mobile wireless device 2 and the communication device 3, while a sixth embodiment to be explained below is characterized in performing the certification process also between the extra mobile wireless device 4 and the mobile wireless device 2.

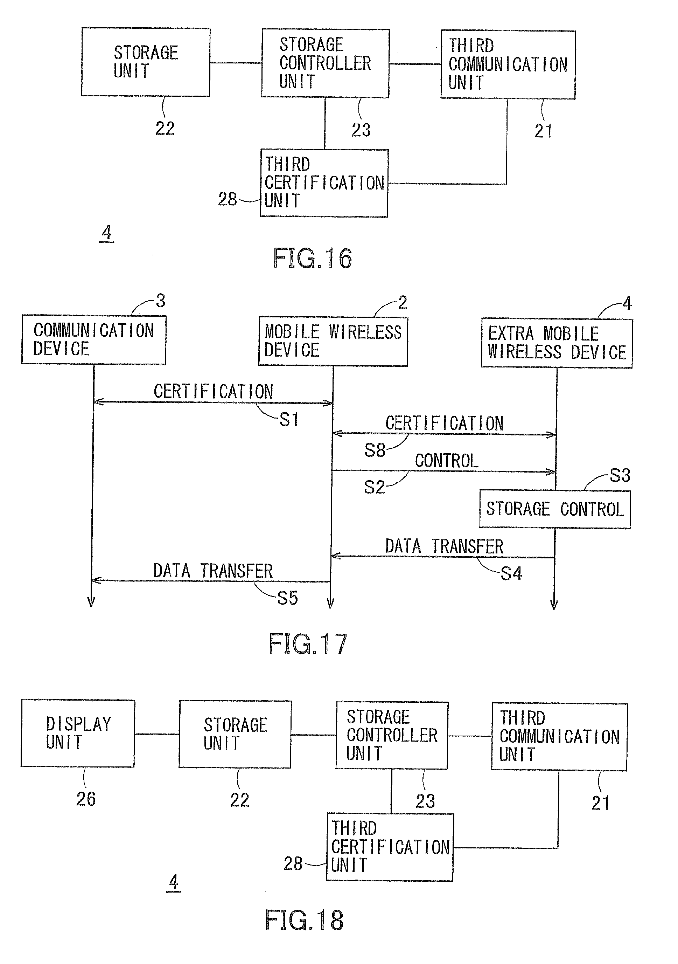

Fig. 16 is a block diagram showing a schematic structure of the extra mobile wireless device 4 according to the sixth embodiment. The extra mobile wireless device 4 shown in Fig. 16 further has a third certification unit 28 in addition to the components shown in Fig. 3.

The third certification unit 28 performs a certification process between the extra mobile wireless device 4 and the mobile wireless device 2 via the proximity wireless communication using the third communication unit 21. Although an illustration of the internal structure of the mobile wireless device 2 will be omitted, the mobile wireless device 2 also has a certification unit (secondary certification unit) for performing the certification process between the secondary certification unit and the third certification unit 28.

Since the mobile wireless device 2 can access the storage 22 in the extra mobile wireless device 4 only when the certification process between the mobile wireless device 2 and the extra mobile wireless device 4 has been normally completed, access to the storage 22 is prohibited when the extra mobile wireless device 4 is replaced with another device, which makes it possible to prevent illegal access to the storage 22 more securely.

Fig. 17 is a sequence diagram showing processing operations performed by the wireless communication system 1 according to the sixth embodiment. Fig. 17 is different from Fig. 5 in providing, between Step S1 and Step S2, Step S8 for performing a certification process between the mobile wireless device 2 and the extra mobile wireless device 4.

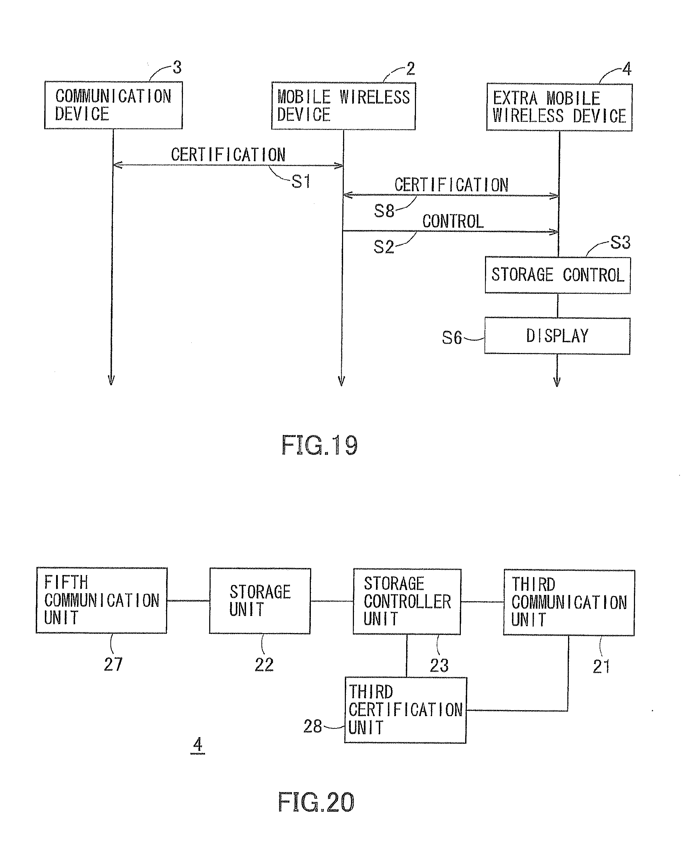

Fig. 18 shows the extra mobile wireless device 4 according to a first modification example derived from Fig. 16, which is obtained by adding the display 26 to the components shown in Fig. 16. Fig. 19 is a sequence diagram corresponding to Fig. 18. Fig. 19 includes a process for displaying the information stored in the storage 22 on the display 26 (Step S6), instead of Steps S4 and S5 of Fig. 17.

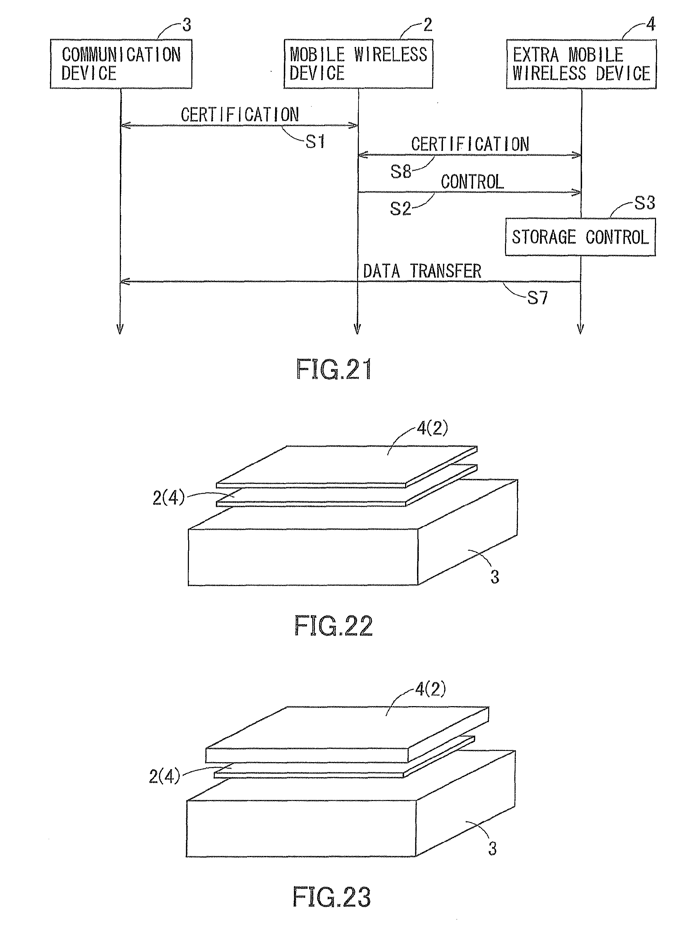

Fig. 20 shows the extra mobile wireless device 4 according to a second modification example derived from Fig. 16, which is obtained by adding the fifth communication unit 27 to the components shown in Fig. 16. Fig. 21 is a sequence diagram corresponding to Fig. 20. Fig. 21 includes a process for transmitting the information stored in the storage 22 directly to the communication device 3 without involving the mobile wireless device 2 (Step S7), instead of Steps S4 and S5 of Fig. 17.

As further modification examples, the display 26 may be added to the components shown in Fig. 20, or the first power receiver 15 may be added to the components shown in Fig. 16, Fig. 18, or Fig. 20.

As stated above, in the sixth embodiment, the certification process can be performed not only between the mobile wireless device 2 and the communication device 3 but also between the mobile wireless device 2 and the extra mobile wireless device 4, which makes it possible to prevent the extra mobile wireless device 4 from illegal utilization such as replacing the extra mobile wireless device 4 with another device.

### (Seventh Embodiment)

A seventh embodiment to be explained below is characterized in providing various modification examples which can be commonly applied to the first to sixth embodiments.

At least one of the mobile wireless device 2 and the extra mobile wireless device 4 explained in the first to sixth embodiments may have a card-like housing. In this case, the components in each of the mobile wireless device 2 and the extra mobile wireless device 4 are made as one or more semiconductor chips to be incorporated into the card-like housing. Here, the semiconductor chip may be accommodated in the card-like housing in order not to be observed from the outside of the housing, or may be attached to the surface of the card-like housing.

When each of the mobile wireless device 2 and the extra mobile wireless device 4 has a card-like housing, they can be placed more closely by superposing their opposing faces on each other, which improves the quality of the proximity wireless communication therebetween.

When each of the mobile wireless device 2 and the extra mobile wireless device 4 has a card-like housing, it is general that the antenna for the respective communication units in each device is annularly arranged along the periphery of the card-like housing. Accordingly, it is desirable to wholly superpose the devices on each other in order to improve communication quality.

Fig. 22 is a diagram showing an example where the opposing faces of the mobile wireless device 2 and extra mobile wireless device 4 each having a card-like housing are superposed on each other and placed in proximity to the communication device 3. In the example of Fig. 22, the communication device 3 is arranged undermost, any one of the mobile wireless device 2 and the extra mobile wireless device 4 is arranged thereon, and the other mobile wireless device is arranged further thereon. In the case of Fig. 22, the user is required only to hold the mobile wireless device 2 and extra mobile wireless device 4 superposed on each other over the communication device 3, to perform the certification process and transfer information using the extra mobile wireless device 4 simply.

Fig. 23 is a diagram showing an example where any one of the mobile wireless device 2 and the extra mobile wireless device 4 has a card-like housing and the other is a mobile apparatus (e.g., smartphone and tablet terminal) having a thickness larger than that of the card-like housing. In Fig. 23, the mobile apparatus is arranged on the card-like housing, but these may be arranged in reverse order.

For example, when the mobile wireless device 2 has a card-like housing and the extra mobile wireless device is a mobile apparatus having hardware capable of transferring and processing a large volume of information at high speed, if the mobile wireless device 2 has normally completed the certification process, the mobile apparatus can be used to perform various processes by transmitting and receiving a large volume of information at high speed.

To the contrary, when the mobile wireless device 2 is a mobile apparatus and the extra mobile wireless device 4 has a card-like housing, the card-like housing has limited functions but can be replaced with another card-like housing as needed since the RF signal to be transmitted and received is hardly blocked.

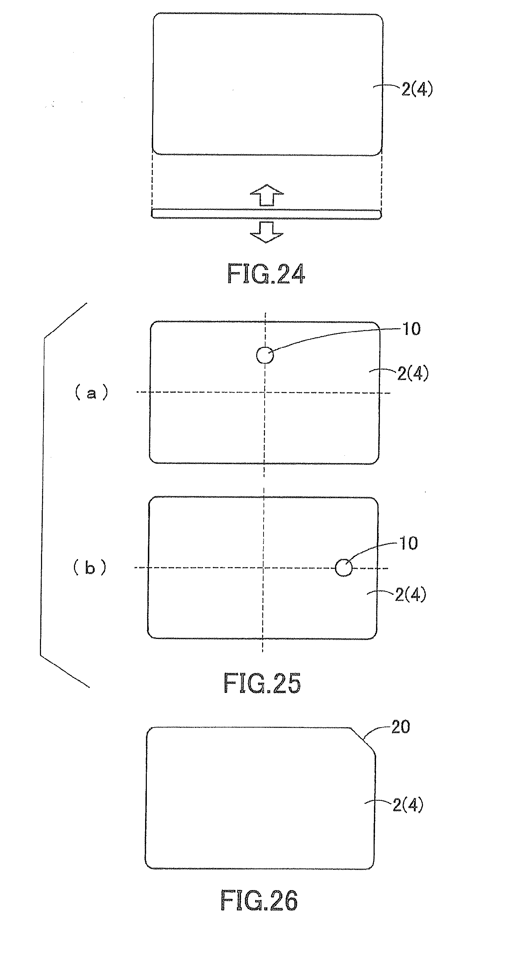

When each of the mobile wireless device 2 and the extra mobile wireless device 4 has a card-like housing, the antenna incorporated into the card-like housing should desirably have a directivity in the normal direction from the front surface and back surface of the card-like housing, as shown in Fig. 24. In this case, even when the order of superposition of the devices is changed, similar communication quality can be obtained.

In order to obtain the directivity as shown in Fig. 24, a plurality of antennas may be provided for the second communication unit 13 or the third communication unit 21. Further, a plurality of the second communication units 13 or third communication units 21 may be provided in addition to the antennas.

For example, when a plurality of extra mobile wireless devices 4 are prepared so that some of them are arranged on the side of the front surface of the mobile wireless device 2 and the others are arranged on the side of the back surface of the mobile wireless device 2, the mobile wireless device 2 can perform proximity wireless communication simultaneously with the extra mobile wireless devices 4, which improves communication efficiency.

When at least one of the mobile wireless device 2 and the extra mobile wireless device 4 has a card-like housing, the housing may have a thickness equal to or smaller than 1/4 wavelength of the frequency at which the second communication unit 13 and the third communication unit 21 communicate with each other. This hardly causes the phenomenon of weakening or strengthening signals by the reflection on the front surface or back surface of the card-like housing, which makes it possible to stabilize the quality of communication between the second communication unit 13 and the third communication unit 21.

When each of the mobile wireless device 2 and the extra mobile wireless device 4 has a card-like housing, an antenna 10 for the second communication unit 13 and the third communication unit 21 may be arranged on a symmetry axis of the card-like housing. In Fig. 25(a) and Fig. 25(b), the symmetry axis is shown with broken line. By arranging the antenna 10 on the symmetry axis, it is more likely that the card-like housings superposed on each other have the antennas 10 placed in proximity to each other.

More specifically, when two card-like housings are superposed on each other, there are four patterns of arrangement. When each card-like housing has the antenna 10 arranged on the symmetry axis, the antennas 10 are placed in proximity to each other in two of four patterns. On the other hand, when each card-like housing has the antenna 10 arranged away from the symmetry axis, the antennas 10 are placed in proximity to each other only in one of four patterns. Since communication quality is improved when the antennas 10 are placed in proximity to each other, the antenna 10 should be desirably arranged on the symmetry axis.

Since the antenna is incorporated into the card-like housing as stated above, it is highly possible that the antenna cannot be observed from the outside of the card-like housing. Accordingly, as shown in Fig. 26, the card may have a cut-off corner 20 so that cards can be superposed on each other always in the same direction. Instead, an arrow etc. may be illustrated on at least one of the front surface and back surface of the card to display the direction to superpose cards on each other.

The proximity wireless communication between the mobile wireless device and the communication device 3 may be contactless communication using electromagnetic induction, such as NFC (Near Field Communication) and Felica (registered trademark), or may be contact communication using electrical contact.

The proximity wireless communication between the mobile wireless device 2 and the extra mobile wireless device 4 may be contactless communication using electromagnetic induction, such as NFC (Near Field Communication) and Felica (registered trademark), or may be contactless communication using microwaves or millimeter waves.

The proximity wireless communication between the extra mobile wireless device 4 and the communication device 3 may be wireless communication using microwaves or millimeter waves, such as TransferJet, WiFi, and UWB.

At least a part of the wireless communication system 1 explained in the above embodiments may be formed of hardware or software. In the case of software, a program realizing at least a partial function of the wireless communication system 1 may be stored in a recording medium such as a flexible disc, CD-ROM, etc. to be read and executed by a computer. The recording medium is not limited to a removable medium such as a magnetic disk, optical disk, etc., and may be a fixed-type recording medium such as a hard disk device, memory, etc.

Further, a program realizing at least a partial function of the wireless communication system 1 can be distributed through a communication line (including radio communication) such as the Internet. Furthermore, this program may be encrypted, modulated, and compressed to be distributed through a wired line or a radio link such as the Internet or through a recording medium storing it therein.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A mobile wireless device comprising:
a first communication unit configured to perform proximity wireless communication with a communication device;
a certification unit configured to perform a certification process between the mobile wireless device and the communication device via the proximity wireless communication using the first communication unit;
a second communication unit configured to perform proximity wireless communication with an extra mobile wireless device; and
an operation controller configured to control the extra mobile wireless device via the proximity wireless communication using the second communication unit, after the certification process is normally completed.

2. The mobile wireless device of claim 1,
wherein the operation controller acquires information concerning functions of the extra mobile wireless device from the extra mobile wireless device through the second communication unit, and controls the extra mobile wireless device based on the acquired information.

3. The mobile wireless device of claim 1, further comprising:
a power receiver configured to wirelessly receive power,
wherein at least one of the first communication unit and the certification unit is driven by the power received by the power receiver.

4. The mobile wireless device of claim 1, further comprising:
a secondary certification unit configured to perform a certification process between the mobile wireless device and the extra mobile wireless device via the proximity wireless communication using the second communication unit,
wherein the operation controller controls the extra mobile wireless device via the proximity wireless communication using the second communication unit, after the certification process using the certification unit and the certification process using the secondary certification unit are normally completed.

5. The mobile wireless device of claim 1,
wherein the mobile wireless device has a card-like housing incorporating the first communication unit, the second communication unit, and the operation controller therein.

6. A wireless communication system having a first mobile wireless device and a second mobile wireless device performing proximity wireless communication with each other,
the first mobile wireless device comprising:
a first communication unit configured to perform proximity wireless communication with a communication device;
a first certification unit configured to perform a certification process between the first mobile wireless device and the communication device via the proximity wireless communication using the first communication unit;
a second communication unit configured to perform proximity wireless communication with the second mobile wireless device; and
an operation controller configured to control the second mobile wireless device via the proximity wireless communication using the second communication unit, after the certification process is normally completed, and
the second mobile wireless device comprising:
a third communication unit configured to perform proximity wireless communication with the first mobile wireless device through the second communication unit;
a storage configured to store information; and
a storage controller configured to control access to the storage, based on an instruction transmitted from the operation controller through the third communication unit.

7. The wireless communication system of claim 6,
wherein the second mobile wireless device further comprises:
a fourth communication unit configured to perform proximity wireless communication with the communication device at a higher speed than the third communication unit, and
the storage controller controls at least one of transmitting and receiving information between the storage and the communication device through the fourth communication unit.

8. The wireless communication system of claim 6,
wherein the first mobile wireless device has a second certification unit configured to perform a certification process between the first mobile wireless device and the second mobile wireless device via the proximity wireless communication using the second communication unit, and
the second mobile wireless device comprises a third certification unit configured to perform a certification process between the second mobile wireless device and the first mobile wireless device via the proximity wireless communication using the third communication unit.

9. The wireless communication system of claim 6,
wherein each of the first mobile wireless device and the second mobile wireless device comprises a card-like housing, and
when a card-like housing corresponding to the first mobile wireless device is superposed on a card-like housing corresponding to the second mobile wireless device and placed in proximity to the communication device, the proximity wireless communication using each of the first to third communication units is performed.

10. A wireless communication method comprising:
performing proximity wireless communication between a mobile wireless device and a communication device using a first communication unit of the mobile wireless device;
performing a certification process between the mobile wireless device and the communication device via the proximity wireless communication using the first communication unit;
performing proximity wireless communication between the mobile wireless device and an extra mobile wireless device using a second communication unit of the mobile wireless device;
controlling the extra mobile wireless device via the proximity wireless communication using the second communication unit, after the certification process is normally completed.

11. The method of claim 10,
wherein the controlling acquires information concerning functions of the extra mobile wireless device from the extra mobile wireless device through the second communication unit, and controls the extra mobile wireless device based on the acquired information.

12. The method of claim 10, further comprising:
wirelessly receiving power,
wherein at least one of the first communication unit and the certification unit is driven by the received power.

13. The method of claim 10, further comprising:
performing a secondary certification process with the extra mobile wireless device via the proximity wireless communication,
wherein the controlling controls the extra mobile wireless device via the proximity wireless communication using the second communication unit, after the certification process and the secondary certification process is normally completed.

14. The method of claim 10, further comprising:
wherein the proximity wireless communication by the first communication unit, the proximity wireless communication by the second communication unit and the control of the extra mobile wireless device are performed inside of a card-like housing.
